# EUROPÄISCHE PATENTSCHRIFT

(11) **EP 2 755 095 B1**
(45) Veröffentlichungstag und Bekanntmachung des Hinweises auf die Patenterteilung: **20.04.2016**
(21) Anmeldenummer: 14164249.6
(22) Anmeldetag: 09.02.2011
(51) Int. Cl.: G05B 19/401

(54) **Verfahren zum Regeln eines Messvorgangs mittels virtueller Oberflächen**
Method for controlling a measuring process by means of virtual interfaces
Procédé de régulation d'un procédé de mesure au moyen de surfaces virtuelles

(30) Priorität: 15.02.2010 DE 102010008751; 23.03.2010 DE 102010012974
(43) Veröffentlichungstag der Anmeldung: 16.07.2014
(62) Teilanmeldung aus: 11705482.5
(73) Patentinhaber: Carl Zeiss Industrielle Messtechnik GmbH, 73447 Oberkochen (DE)
(72) Erfinder: Ruck, Otto, 73479 Ellwangen-Pfahlheim (DE); Bernhardt, Ralf, 73432 Aalen (DE)
(74) Vertreter: Witte, Weller & Partner Patentanwälte mbB

(56) Entgegenhaltungen:
- EP-A1- 2 537 074
- EP-A2- 0 849 653
- WO-A1-2009/024783
- DE-A1- 4 336 863
- DE-A1- 19 805 155
- US-A1- 2006 273 268

## Beschreibung

Die vorliegende Erfindung betrifft ein Verfahren zum Regeln eines Messvorgangs eines Koordinatenmessgeräts zum Vermessen eines Messobjekts, wobei das Koordinatenmessgerät eine Regelungseinrichtung und einen Tastkopf mit einem Taststift aufweist, und wobei eine Relativbewegung zwischen dem Taststift und einer Oberfläche des Messobjekts von der Regelungseinrichtung geregelt wird.

Des Weiteren betrifft die vorliegende Erfindung ein Koordinatenmessgerät zum Vermessen eines Messobjekts, mit einer Regelungseinrichtung und einem Tastkopf, der einen Taststift aufweist, wobei eine Relativbewegung zwischen dem Taststift und einer Oberfläche des Messobjekts von der Regelungseinrichtung geregelt wird.

Ein derartiges Verfahren und ein derartiges Koordinatenmessgerät sind beispielsweise aus der Druckschrift US 5 737 244 (A) bekannt.

Dreidimensionale Koordinatenmessgeräte sind im Stand der Technik allgemein bekannt. In industriellen Anwendungen werden sie dazu verwendet, Werkstücke zu vermessen und sie dadurch beispielsweise einer Qualitätskontrolle zu unterziehen. Aber auch in anderen Anwendungsbereichen, beispielsweise im Bereich des "Reverse-Engineering" werden derartige Koordinatenmessgeräte verwendet.

Zum Vermessen der Werkstücke werden unterschiedliche Messsysteme verwendet. Üblicherweise sind dies entweder optische Messsysteme, die ein berührungsfreies Vermessen der Werkstücke ermöglichen, oder taktile Messsysteme, bei denen das Werkstück in bestimmten Punkten angetastet wird, um die Koordinaten der angetasteten Punkte des Werkstücks zu erfassen.

Die vorliegende Erfindung beschäftigt sich mit Koordinatenmessgeräten, die taktile Messsysteme aufweisen. Solch ein Koordinatenmessgerät besitzt einen Tastkopf, der in einem Messraum relativ zu einem Werkstück dreidimensional bewegbar angeordnet ist. Der Tastkopf weist eine Sensorik auf, die einen Taststift beweglich lagert und dazu in der Lage ist, eine Auslenkung des Taststifts relativ zur Tastkopfbasis zu erfassen. Der Taststift weist eine Tastspitze auf, an der ein Tastobjekt, in der Regel eine Tastkugel, vorgesehen ist. Aufgrund der bekannten Geometrie des Taststifts und der bekannten Position des Tastkopfes in dem Messraum kann man mit Hilfe der von der Sensorik erfassten Auslenkung Raumkoordinaten des angetasteten Messpunktes an dem Werkstück bestimmen.

Zum Vermessen eines Werkstücks sind verschiedene Messarten bekannt. Die Vermessung kann derart erfolgen, dass eine Vielzahl von Punkten einzeln angetastet wird. Ein derartiges Messverfahren ermöglicht beispielsweise das Erfassen von vollständig unbekannten Geometrien, erfordert jedoch aufgrund des einzelnen Antastens jedes Messpunkts einen erhöhten Zeitaufwand.

Daneben sind auch so genannte Scanning-Verfahren bekannt, bei denen der Taststift in Kontakt mit dem zu vermessenden Werkstück entlang dem zu vermessenden Werkstück verfahren wird und so eine Vielzahl von Messpunkten entlang einer Bahn auf der Werkstückoberfläche erfasst. Auf diese Weise ist es möglich, sehr schnell eine hohe Anzahl von Messpunkten zu erfassen. Dafür ist es jedoch notwendig, die Bewegungsbahn des Tastkopfes derart zu regeln, dass sich der Taststift bzw. die Tastkugel ständig in Kontakt mit der Oberfläche des Werkstücks befindet. Hierzu ist in der Regel eine Sollgeometrie der Bahn vorbekannt. Beispielsweise kann bekannt sein, dass der Innendurchmesser einer kreisförmigen Bohrung vermessen werden soll, so dass die Sollgeometrie eine Kreisbahn ist. Die Kenntnis dieser Sollgeometrie erleichtert das Regeln der Bahn des Tastkopfs während des Scanning-Vorgangs, so dass nur anhand der tatsächlichen Abweichung der Messpunkte von der Sollgeometrie eine Nachregelung der Bahn des Tastkopfs zu erfolgen hat.

Des Weiteren sind im Stand der Technik so genannte aktiv messende und so genannte passiv messende Tastköpfe bekannt. Bei den passiv messenden Tastköpfen ist der Taststift im wesentlichen über mechanische Federelemente gelagert. Eine Auslenkung des Taststifts ist somit stets proportional zu einer Federkraft der Lagerung und damit zu einer Antastkraft, mit der der Taststift gegen die Werkstückoberfläche drückt. Während eines Scanning-Vorgangs entlang einer Werkstückoberfläche ist es von Vorteil, wenn sich die Antastkraft nur in einem bestimmten Bereich befindet, um ein übermäßiges Durchbiegen des Taststifts oder eine Beschädigung des Werkstücks zu vermeiden. Da bei passiv messenden Tastköpfen die Antastkraft proportional zu der Auslenkung des Taststifts ist, muss in diesem Fall der Tastkopf bewegt werden, um die Auslenkung des Taststifts und damit die Antastkraft zu ändern. Eine Bewegung des Tastkopfs hat Beschleunigungen und damit Trägheitskräfte zur Folge, was die Regelung eines solchen passiv messenden Tastkopfs erschweren kann.

Bei aktiv messenden Tastköpfe kann die Antastkraft unabhängig von der Auslenkung des Taststifts mit Hilfe von Messkraftgebern (zum Beispiel elektromotorische bewegte Tauchspulen oder Piezoelemente) eingestellt werden. Dies ermöglicht es, das Werkstück auch bei großen Auslenkungen des Taststifts, mit einer kleinen und/oder über den Verlauf eines Scanning-Vorgangs gleichbleibenden Antastkraft anzutasten, ohne dass dies eine übermäßige Bewegung, eventuell sogar gar keine Bewegung, des Tastkopfs zur Folge hat.

Die vorliegende Erfindung ist in erster Linie dazu vorgesehen, mit aktiv messenden Tastköpfen verwendet zu werden. Grundsätzlich ist sie jedoch auch bei passiv messenden Tastköpfen anwendbar.

Scanning-Verfahren sind vergleichweise problemlos anwendbar, wenn glatte Oberflächen abzutasten sind. Weisen die abzutastenden Oberflächen jedoch Erhebungen oder Vertiefungen auf, etwa eingefräste Nuten, können Probleme auftreten, wenn sich der Taststift mit seiner Tastkugel an einer Erhebung oder in einer Vertiefung verhakt. Insbesondere Vertiefungen in Werkstückoberflächen können hier ein Problem darstellen. Unter Umständen ist es auch aber gar nicht nötig, die Vertiefung in der Werkstückoberfläche genau zu vermessen, da es lediglich auf den Verlauf der Oberfläche, in die diese Vertiefung eingearbeitet ist, ankommt, beispielsweise darauf, ob die Oberfläche tatsächlich kreisrund oder plan ist.

Die Grundbegriffe der Koordinatenmesstechnik und insbesondere Verfahren zu der Auswertung der Messergebnisse sind dem Fachmann bekannt. Hinweise zu bekannten Verfahren der Koordinatenmesstechnik und insbesondere zu Interpolationsverfahren finden sich in dem Fachbuch Weckenmann, Gawande, "Koordinatenmesstechnik", Carl Hanser Verlag, München, 1999, ISBN 3-446-17991-7, auf das hier insoweit ausdrücklich Bezug genommen ist..

Ein häufig auftretendes Problem ist, dass eine Tastkugel des Taststifts, sobald sich der Taststift über eine Vertiefung in einer Oberfläche bewegt, von einer Regelungseinrichtung derart nachgeregelt wird, dass der Taststift in die Vertiefung eintaucht. Die Tastkugel "fällt" quasi in die Vertiefung. Im weiteren Verlauf schlägt der Taststift dann an der gegenüberliegenden Kante der Nut an, wenn die Nut endet. Da der Scanning-Vorgang mit einem bestimmten Vorschub erfolgt, beispielsweise fünf Millimeter pro Sekunde, kann es vorkommen, dass der Taststift nicht mehr schnell genug aus der Nut "herausgehoben" werden kann. In der Folge kann es entweder zu Beschädigungen des Taststiftes kommen, oder aber der Scanning-Vorgang muss abgebrochen werden, damit die Regelungseinrichtung des Koordinatenmessgeräts den Taststift zunächst erst wieder aus der Vertiefung bzw. der Nut befreien kann.

Es wurde daher nach Lösungsmöglichkeiten gesucht, ein derartiges "Eintauchen" des Taststifts in Vertiefungen einer zu vermessenden Oberfläche zu vermeiden.

So schlägt die US 5 895 444 (A), die eine Weiterbildung der eingangs genannten US 5 737 244 (A) darstellt, vor, bei ungefährer Kenntnis der Lage einer Werkstückvertiefung eine negative virtuelle Messkraft einzustellen. "Negativ" bedeutet in diesem Fall, dass die Messkraft in der Normalenrichtung weg von der zu vermessenden Oberfläche des Werkstücks zeigt. Die Regelungseinrichtung wird dann annehmen, dass die Antastkraft zu groß ist und die Tastkugel von der Werkstückoberfläche abheben. Auf diese Weise ist es möglich, über die Vertiefung zu "springen". Nachdem die Vertiefung überquert wurde, wird die virtuell vorgegebene Kraft entfernt, und die Regelungseinrichtung tastet die Werkstückoberfläche wieder an. Dies setzt jedoch voraus, dass die ungefähre Lage der Vertiefungen bekannt ist.

Auch in WO 2008/074989 A1 wird vorgeschlagen, die Tastkugel bei Annäherung an eine Vertiefung von der Werkstückoberfläche abzuheben, um ein Eintauchen und Verhaken der Tastkugel bzw. des Taststifts in einer Vertiefung zu vermeiden. Auch hier muss die ungefähre Lage einer Nut bzw. Vertiefung bekannt sein.

Es ist eine Aufgabe der vorliegenden Erfindung, eine Möglichkeit zum Scannen einer Werkstückoberfläche mit Vertiefungen bereitzustellen, die ein Scannen auch dann möglich macht, wenn sich an einer Messposition überhaupt kein Werkstück befindet, beispielsweise aufgrund der Vertiefung. Dabei sollen alle bekannten Mess-, Scan- und Interpolationsverfahren ohne Änderungen anwendbar bleiben und vermieden werden, dass sich ein Taststift in der Vertiefung verhakt, auch wenn keine Kenntnis über vorhandene Vertiefungen besteht. Des Weiteren muss erkennbar bleiben, ob ein erfasster Messwert von der tatsächlich gescannten Werkstückoberfläche stammt.

Gemäß einem ersten Aspekt der Erfindung wird daher vorgeschlagen, das eingangs genannte Verfahren dahingehend weiterzubilden, dass die Oberfläche mindestens einen tatsächlichen Abschnitt, der einer Messobjektoberfläche entspricht, und mindestens einen virtuellen Abschnitt aufweist.

Gemäß einem zweiten Aspekt der Erfindung wird vorgeschlagen, das eingangs genannte Koordinatenmessgerät dahingehend weiterzubilden, dass die Oberfläche mindestens einen tatsächlichen Abschnitt, der einer Messobjektoberfläche entspricht, und mindestens einen virtuellen Abschnitt aufweist.

Gemäß einem dritten Aspekt der Erfindung wird ein Computerprogramm mit Programmcodemitteln vorgeschlagen, das dazu ausgebildet ist, alle Schritte eines Verfahrens gemäß dem ersten Aspekt der Erfindung auszuführen, wenn das Computerprogramm in der Steuerung eines Koordinatenmessgerätes ausgeführt wird.

Es werden im Regelungsprozess also virtuelle, tatsächlich am Werkstück nicht vorhandene Oberflächen berücksichtigt, die von einem Benutzer des Koordinatenmessgerätes vorab definiert werden, beispielsweise mit Hilfe einer geeigneten Anwendersoftware vorgegeben werden können. Diese virtuellen Oberflächen können in ihrer Form und Lage weitgehend beliebig im Messraum angeordnet werden und z.B. aus ebenen Flächen, Zylindern oder Kugeln bestehen. Die virtuelle Oberfläche ergänzt und/oder verändert die tatsächlich vorhandene Werkstückoberfläche, und sie bestimmt somit die Bewegungsbahn des Taststiftes relativ zum Werkstück und der tatsächlichen Werkstückoberfläche. Da die Sollgeometrie des zu vermessenden Werkstücks grundsätzlich bekannt ist, ist es vorteilhaft möglich, die virtuelle Oberfläche so zu definieren und in dem Messraum zu platzieren, dass Vertiefungen in der realen Werkstückoberfläche "aufgefüllt" werden. Der Taststift "springt" dann über die Vertiefung, indem er aufgrund der Regelung an der virtuellen Oberfläche entlang geführt wird. In einigen Fällen ist es von Vorteil, wenn die virtuelle Oberfläche in dem Werkstück und somit unter der tatsächlichen Werkstückoberfläche liegt. Soll beispielsweise eine Kugel gescannt werden, könnte die virtuelle Oberfläche eine Kugel mit einem etwas geringeren Radius sein. Befinden sich nun Vertiefungen, wie beispielsweise Nuten, in der tatsächlichen Werkstückoberfläche, werden diese Vertiefungen bzw. Nuten von der virtuellen Oberfläche "überdeckt". Trifft eine Tastkugel des Taststifts dann auf diese virtuelle Oberfläche, werden Regel- und Messgrößen erzeugt, die denen einer tatsächlichen Oberfläche entsprechen. Entsprechend regelt die Regelungseinrichtung die Position der Tastkugel bzw. des Tastkopfs, als ob es sich bei der virtuellen Oberfläche um eine tatsächliche Oberfläche handelt. Eine Tastkugel würde daher nicht bis zum Grund in die Vertiefung eintauchen, sondern auf der virtuellen Oberfläche entlang laufen. Die zu überwindenden Höhenunterschiede sind somit geringer, so dass am Ende einer tatsächlichen Vertiefung die Tastkugel bzw. der Taststift problemlos wieder auf die tatsächliche Werkstückoberfläche gelangen kann. Beim Scannen einer Zahnradgeometrie kann eine vorteilhafte virtuelle Oberfläche einen Hüllkörper bilden, der sich wie eine gedachte Folie über die Spitzen der einzelnen Zähne spannt. Wenn die Regelungseinrichtung den Taststift entlang einer solchen virtuellen Oberfläche bewegt, taucht das Tastobjekt am freien Ende des Taststiftes nicht zwischen die tatsächlich vorhandenen Zähne ein.

Die von dem Koordinatenmessgerät vermessene Oberfläche, entlang der die Tastkugel bzw. der Taststift geregelt bewegt wurde, setzt sich somit aus tatsächlich am Werkstück vorhandenen, realen Abschnitten zusammen, die der zu vermessenden Werkstückoberfläche entsprechen, und aus virtuellen Abschnitten, die der Regelungseinrichtung beispielsweise in Form von Geometriedaten vorgegeben werden, die jedoch als reale Oberfläche nicht existieren. Vorzugsweise wird an der Regelungseinrichtung und dem Regelungsalgorithmus des Tastkopfs nichts verändert. Da die virtuellen Oberflächen somit problemlos mit der bereits existierenden Regelungs- und Interpolations-Software eines Koordinatenmessgeräts verwendet werden können, können die virtuellen Oberflächen gescannt und mit realen bzw. tatsächlichen Werkstückoberflächen kombiniert werden.

Prinzipiell macht es keinen Unterschied, ob der Taststift bzw. Tastkopf eine feststehende Oberfläche scannt bzw. an einem feststehenden Messobjekt entlang bewegt wird, oder ob die Oberfläche bzw. das Messobjekt an einem feststehenden Taststift bzw. Tastkopf entlang bewegt wird. Es ist auch möglich, dass sowohl der Taststift bzw. Tastkopf als auch die Oberfläche bzw. das Messobjekt bewegt werden. Maßgeblich ist allein eine Relativbewegung zwischen Messobjekt und Tastkopf. Je nach zu vermessendem Messobjekt kann eine geeignete Anordnung vorgesehen werden. Sollen etwa häufig verschiedene Messobjekte mit unterschiedlichen Formen vermessen werden, ist es von Vorteil, dass Messobjekt stationär anzuordnen und den Taststift zu bewegen. Sollen hingegen nur rotationssymmetrische, weitgehend gleich geformte Messobjekte, etwa Zahnräder, vermessen werden, kann es vorteilhafter sein, den Taststift stationär zu halten und das Messobjekt zu drehen. Auf diese Weise kann die zu bewegende Masse klein gehalten werden.

Die eingangs gestellte Aufgabe wird somit vollständig gelöst.

Gemäß einer bevorzugten Weiterbildung der Erfindung werden Messwerte, die in dem mindestens einen virtuellen Abschnitt erfasst werden, markiert.

Da die in den virtuellen Abschnitten erfassten Messwerte nicht tatsächlichen Messwerten der realen Werkstückoberfläche entsprechen, ist es von Vorteil, diese bei der Auswertung der erfassten Raumkoordinaten unberücksichtigt zu lassen. Vorteilhaft werden die Messwerte, die in dem mindestens einen virtuellen Abschnitt erfasst werden, markiert. Diese markierten Messwerte können dann beispielsweise ausgeblendet bzw. maskiert werden, so dass sie bei einer Nachbearbeitung oder Auswertung nicht verwendet werden.

Des Weiteren kann vorgesehen sein, dass der Tastkopf ein aktiv messender Tastkopf ist und die Regelungseinrichtung eine Messkraft des Taststifts regelt, wobei proportional zu einer Eintauchtiefe des Taststifts in den mindestens einen virtuellen Abschnitt eine Gegenkraft auf einen Messkraftgeber des aktiv messenden Tastkopfs beaufschlagt wird.

Auf diese Weise ist es bei aktiven Tastköpfen möglich, die virtuelle Oberfläche, die von einem Anwender oder automatisch festgelegt wurde, in tatsächliche Eingaben in die Regelungseinrichtung des Tastkopfs umzusetzen. Die virtuelle Oberfläche wird als dreidimensionales Vektorfeld erzeugt, wobei das Vektorfeld abhängig von der Positionierung der virtuellen Oberfläche eine bestimmte Lage in dem Messraum einnimmt. Anhand der Lage sind dann die Raumkoordinaten des Messraums bekannt an denen sich die virtuelle Oberfläche befindet. Für jede Raumkoordinate ist dann ein Vektor einer virtuellen Kraft mit seinem Betrag und seiner Richtung festgelegt. Die Richtung weist dabei normal von der Oberfläche der virtuellen Ebene weg. Der Betrag steigt mit zunehmender Tiefe in der virtuellen Oberfläche an, d.h. an der Oberfläche ist er gering und nimmt dann mit zunehmender Tiefe zu. Die vorliegend verwendeten virtuellen Kräfte weisen somit abhängig von den ihnen zugeordneten Raumkoordinaten unterschiedliche Beträge auf. Die virtuelle Oberfläche könnte somit auch als "virtueller Körper" bezeichnet werden. Bewegt sich die Tastkugel nun in eine Punkt mit Raumkoordinaten, die zu der virtuellen Oberfläche gehören, wird die für diese Raumkoordinaten hinterlegte virtuelle Kraft entgegengesetzt zu einer Soll-Antastkraft auf die Soll-Antastkraft beaufschlagt. Für die Regelungseinrichtung des Koordinatenmessgeräts hat dies den Effekt, dass es den Anschein hat, als ob von der virtuellen Oberfläche eine Kraft auf die Tastkugel des Taststifts ausgeübt wird, sobald die Tastkugel die virtuelle Oberfläche "berührt". Auf die Sollwerte der Messkraftgeber wird somit von der Regelungseinrichtung eine Gegenkraft beaufschlagt. Da der Betrag der virtuellen Kräfte, aus denen die virtuelle Oberfläche gebildet ist, mit zunehmender Eintauchtiefe in die virtuelle Oberfläche zunehmen, stellt sich in einer gewissen Eintauchtiefe ein Gleichgewicht zwischen der Soll-Antastkraft und der virtuellen Kraft ein. Ist dieses Gleichgewicht erreicht, taucht die Tastkugel nicht weiter in die virtuelle Ebene ein. Der Tastkopf dringt so nur sehr wenig in die virtuelle Oberfläche ein. Die Lage der virtuellen Ebene ist dann entsprechend so gewählt, dass die Eintauchtiefe der Tastkugel ein "Erklettern" der Nutkante am Ende der Nut ermöglicht.

Das voranstehend beschriebene Vorgehen weist gegenüber dem Stand der Technik insbesondere den Vorteil auf, dass eine Lage der Nuten bzw. Vertiefungen in der tatsächlichen Oberfläche des Messobjekts nicht bekannt sein muss. Mittels der virtuelle Oberfläche lässt sich im Messraum ein wahlweise absolut oder relativ zu dem Messobjekt definierter Bereich erzeugen, in den ein Taststift nicht eindringen kann. Aufgrund dieser durch die virtuellen Oberflächen definierten "verbotenen Zonen" im Messbereich ist während eines Scanning-Vorgangs dem Taststift quasi ein "Sicherungsnetz" untergelegt, dass ein Fallen des Taststifts in die Nut verhindert.

Alternativ kann sowohl bei dem Verfahren gemäß dem ersten Aspekt der Erfindung als auch bei dem Koordinatenmessgerät gemäß dem zweiten Aspekt der Erfindung vorgesehen sein, dass der Tastkopf ein passiv messender Tastkopf ist und die Regelungseinrichtung eine Auslenkung des Taststifts regelt, wobei proportional zu einer Eintauchtiefe des Taststifts in den mindestens einen virtuellen Abschnitt eine virtuelle Auslenkung auf eine Sollauslenkung des Taststifts beaufschlagt wird.

Dabei kann bevorzugt vorgesehen sein, dass die virtuelle Auslenkung entgegengesetzt zu der Sollauslenkung gerichtet ist, so dass sich bei einer bestimmten Eintauchtiefe des Taststifts in den mindestens einen virtuellen Abschnitt ein Gleichgewicht zwischen der Sollauslenkung und der virtuellen Auslenkung bzw. ein Gleichgewicht zwischen den Reglervorgaben einstellt.

Obwohl das Verfahren gemäß dem ersten Aspekt der Erfindung und das Koordinatenmessgerät gemäß dem zweiten Aspekt der Erfindung besonders für bzw. mit aktiv messenden Tastköpfen geeignet ist, kann es auch auf passiv messende Tastköpfe übertragen werden. Hier sind die virtuellen Oberflächen nicht durch bestimmten Raumkoordinaten zugeordnete virtuelle Kräfte umgesetzt, sondern es wird eine virtuelle Auslenkung auf die Soll-Auslenkung beaufschlagt. Der Betrag der Vektoren der virtuellen Auslenkung steigt ebenfalls mit zunehmender Eintauchtiefe an. Die Richtungen der Vektoren der virtuellen Auslenkungen sind entgegen der Richtung der Soll-Auslenkung gerichtet, so dass sich bei einer bestimmten Eintauchtiefe ein Gleichgewicht zwischen einer entsprechenden virtuellen Auslenkung und der Soll-Auslenkung einstellt. So wird auch hier eine Regelung des Tastkopfs entlang der virtuellen Oberfläche erreicht.

Den beiden voranstehend für aktive und für passive Tastköpfe beschriebenen Ausführungsformen ist somit gemein, dass die virtuellen Abschnitte durch mindestens eine virtuelle Oberfläche gebildet sind, wobei die mindestens eine virtuelle Oberfläche als Vielzahl von Vektoren, die mit ihrem Betrag und ihrer Richtung jeweils einer bestimmten Raumkoordinate zugeordnet sind, ausgebildet ist.

In einer weiteren Ausgestaltung sowohl des Verfahrens gemäß dem ersten Aspekt der Erfindung als auch des Koordinatenmessgeräts gemäß dem zweiten Aspekt der Erfindung kann vorgesehen sein, dass eine Lageverschiebung einer bekannten Sollgeometrie des Messobjekts bzw. der zu vermessenden Oberfläche während des Messvorgangs entlang des mindestens einen tatsächlichen Abschnitts erkannt wird, und dass eine Anordnung des mindestens einen virtuellen Abschnitts anhand der Lageverschiebung angepasst wird.

Vorgesehen sein kann somit eine dynamische Verschiebung der Lage der mindestens einen virtuellen Oberfläche. Dies ist insbesondere beim Scannen von Werkstücken mit bekannten Sollgeometrien, z.B. einer Ebene oder einem Zylinder, vorteilhaft. Hierbei wird z.B. eine erkannte Lageverschiebung einer Bohrung - d.h. der Mittelpunkt der Bohrung befindet sich nicht an dem angenommenen Ort - nicht nur für eine Nachregelung eines Interpolationsverfahrens - d.h. die Lage der Sollgeometrie wird für das verwendete Interpolationsverfahren angepasst - sondern gleichzeitig auch für die Nachregelung der Lage bzw. Anordnung der virtuellen Oberfläche verändert. Selbstverständlich darf eine Anpassung bzw. Nachregelung von virtuellen Oberflächen nur dann erfolgen, wenn sich die Tastkugel auf einer tatsächlichen bzw. realen Oberfläche befindet und Messwerte herangezogen werden, die auch auf einer tatsächlichen Oberfläche erfasst wurden.

Auf diese Weise ist es möglich, die Lage der virtuellen Elemente bzw. virtuellen Oberflächen an eine tatsächliche Werkstückform während des Messvorgangs anzupassen.

Letztlich kann sowohl bei dem Verfahren gemäß dem ersten Aspekt der Erfindung als auch bei dem Koordinatenmessgerät gemäß dem zweiten Aspekt der Erfindung vorgesehen sein, dass eine geometrische Form der virtuellen Oberfläche einer Ebene oder einem Zylinder oder einer Kugel entspricht.

Auf diese Weise ist es möglich, die Form der mindestens einen virtuellen Oberfläche an das tatsächliche Werkstück geeignet anzupassen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung werden nachfolgend mit Bezugnahme auf die anliegende Zeichnung erläutert. Es zeigen:
- Fig. 1: eine schematische Ansicht eines Messvorgangs gemäß einer Ausführungsform des Verfahrens gemäß dem ersten Aspekt der Erfindung,
- Fig. 2: eine zweite Ausführungsform des Verfahrens,
- Fig. 3a und 3b: eine dritte Ausführungsform des Verfahrens,
- Fig. 4a bis 4c: eine vierte Ausführungsform des Verfahrens,
- Fig. 5: eine fünfte Ausführungsform des Verfahrens,
- Fig. 6a und 6b: eine sechste Ausführungsform des Verfahrens,
- Fig. 7: ein Koordinatenmessgerät gemäß dem zweiten Aspekt der Erfindung, und
- Fig. 8: eine vereinfachte schematische Darstellung eines aktiven Tastkopfs des Koordinatenmessgeräts in Fig. 7.

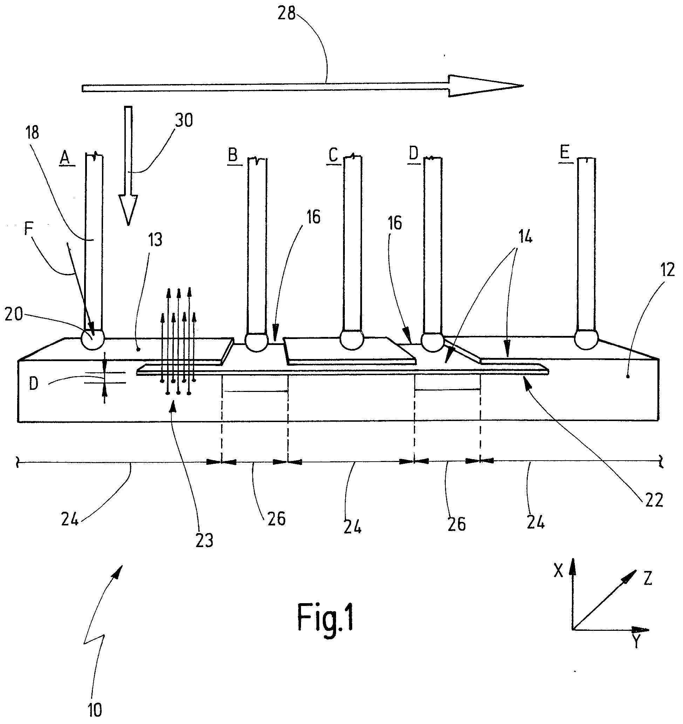

Fig. 1 zeigt den Ablauf eines Verfahrens 10 in einer Ausführungsform, wie er an einem beispielhaft dargestellten Messobjekt 12 ausgeführt werden kann.

In dem vorliegenden Beispiel ist das Messobjekt 12 eine Platte, die daraufhin überprüft werden soll, ob sie tatsächlich eben ist.

Dazu ist eine Messobjektoberfläche 13 zu vermessen. Anhand der gewonnen Messpunkte kann dann im Rahmen einer Auswertung überprüft werden, ob die Messobjektoberfläche 13 des Messobjekts 12 tatsächlich eben ist.

Um dieses zu erreichen, wird eine Oberfläche 14 vermessen, deren Zusammensetzung im Folgenden genauer beschrieben wird.

Die Messobjektoberfläche 13 weist an einigen Stellen Nuten 16 auf. Die Nuten 16 sind lediglich beispielhaft für mögliche Unebenheiten, insbesondere Vertiefungen, in der Messobjektoberfläche 13 dargestellt. Denkbar sind auch alle anderen Arten von Hindernissen, die den Messvorgang beeinträchtigen könnten.

Es ist ein Taststift 18 vorgesehen, der an seinem einen Ende eine Tastkugel 20 aufweist, mit der die Oberfläche 14 angetastet werden soll. Der Taststift 18 ist in der Fig. 1 in verschiedenen Positionen A bis E dargestellt. Im Rahmen eines Messvorgangs durchläuft der Taststift 18 die Positionen A bis E in alphabetischer Reihenfolge, d.h. beginnend bei A und endend bei E.

Fährt der Taststift 18 nun die Messobjektoberfläche 13 entlang, um diese abzuscannen, wobei sich die Tastkugel 20 in Kontakt mit der Messobjektoberfläche 13 befindet, muss der Taststift 18 die Nuten 16 überqueren. Damit eine Regelung den Taststift 18 während der Durchführung des Verfahrens 10 nicht zu tief in die Nuten 16 eindringen lässt, so dass sich der Taststift 18 mit der Tastkugel 20 eventuell in den Nuten 16 verhakt, ist eine virtuelle Oberfläche 22 vorgesehen, die entsprechend der tatsächlich zu vermessenden Messobjektoberfläche 13 angeordnet ist. Im vorliegenden Beispiel soll festgestellt werden, ob die Messobjektoberfläche 13 tatsächlich eben bzw. plan ist. Entsprechend kann hier vorgesehen sein, dass sich die virtuelle Oberfläche 22 einige Millimeter unterhalb der Messobjektoberfläche 13 parallel zu dieser erstreckt. Mittels derartiger Randbedingungen kann die virtuelle Oberfläche 22 auch automatisch bzw. rechnergestützt angeordnet werden.

Die virtuelle Oberfläche 22 ist als Vielzahl von Vektoren 23, die mit ihrem Betrag und ihrer Richtung jeweils einer bestimmten Raumkoordinate (X,Y,Z) zugeordnet sind, ausgebildet. Bei den Vektoren kann es sich abhängig von der Art eines Tastkopfs um virtuelle Kräfte oder virtuelle Vektoren handeln.

Die virtuelle Oberfläche 22 wird während der Durchführung des Verfahrens 10 behandelt wie eine tatsächliche bzw. reale Messobjektoberfläche 13 des Messobjekts 12. Entsprechend wird der Taststift 18 mit der Tastkugel 20 geregelt, als ob die virtuelle Oberfläche 22 eine tatsächliche Messobjektoberfläche 13 ist. Auf diese Weise kann verhindert werden, dass die Tastkugel 20 zu weit in die Nut 16 eindringt. Die Oberfläche 14, die somit während des Verfahrens 10 von der Tastkugel 20 gescannt wird, setzt sich somit aus der tatsächlichen Messobjektoberfläche 13 und der virtuellen Oberfläche 22 zusammen. Die Oberfläche 14 weist somit tatsächliche Abschnitte 24 und virtuelle Abschnitte 26 auf. Bei einer Auswertung der Messergebnisse ist folglich darauf zu achten, dass nur diejenigen Messergebnisse herangezogen werden, die während der Antastung der tatsächlichen Messobjektoberfläche 13 erfasst wurden. Es werden auch bei Antastung der virtuellen Oberfläche 22 in den virtuellen Abschnitten 26 der Oberfläche 16 Messwerte erlangt, diese entsprechen aber natürlich nicht den realen Gegebenheiten und müssen somit bei einer Auswertung ausgeblendet werden.

Der Ablauf eines Messvorgangs des Verfahrens 10 beginnt somit in einer Position A des Taststifts 18, in der die Tastkugel 20 die tatsächliche Messobjektoberfläche 13 antastet. Die Tastkugel 20 befindet sich dabei in einem tatsächlichen Abschnitt 24 der Oberfläche 14. Die Tastkugel 20 wird nun entlang einer Vorschubrichtung 28 bewegt, wobei die Vorschubrichtung 28 stets in etwa einer Sollgeometrie der zu vermessenden Messobjektoberfläche 13 folgt. Die Tastkugel 20 drückt dabei in einer Normalenrichtung 30, d.h. senkrecht zu der Vorschubrichtung 28, auf die Messobjektoberfläche 13. Dadurch wirkt eine Antastkraft F zwischen der Tastkugel 20 und der Messobjektoberfläche 13. Bei stehendem Taststift 18 kann die Antastkraft F von der Normalenrichtung 30 abweichen, wie lediglich beispielhaft in der Fig. 1 dargestellt ist. In diesem Fall kann sich die Antastkraft F innerhalb eines Haftreibungskegels des Kontaktpunkts zwischen der Tastkugel 20 und der Messobjektoberfläche 13 befinden. Sobald die Tastkugel 20 jedoch die Messobjektoberfläche 13 entlang bewegt wird und die Haftreibung in Gleitreibung übergeht, lässt sich die Richtung der Antastkraft F mittels eines üblichen Kräfteparallelogramms aus der Kraft in Normalenrichtung 30 und der Gleitreibungskraft in Richtung der Messobjektoberfläche 13 bestimmen. Geht man davon aus, dass bei einem geringen vorliegenden Reibungskoeffizienten zwischen der Tastkugel 20 und der Messobjektoberfläche 13 die Größe der Gleitreibungskraft gegenüber der Größe der Kraft in Normalenrichtung sehr klein ist, entspricht bei einem geringen vorliegenden Reibungskoeffizienten die Richtung der Antastkraft F im wesentlichen der Normalenrichtung 30.

Tritt die Tastkugel 20 nun von der Messobjektoberfläche 13 in die Nut 16, bewegt sich die Tastkugel 20 um ein gewisses Maß in die Nut, bis sie auf die virtuelle Oberfläche 22 trifft. Die Tastkugel 20 befindet sich nun in dem virtuellen Abschnitt 26 der Oberfläche 14. Für das Verfahren macht es grundsätzlich keinen Unterschied, ob die Tastkugel 20 auf einer realen bzw. tatsächlichen Messobjektoberfläche 13 befindlich ist oder auf der virtuellen Oberfläche 22. Die Eingaben in eine Regelungseinrichtung, die den Taststift 18 regelt, sind dieselben. Trifft die Tastkugel 20 auf die virtuelle Oberfläche 22, erfolgt eine in Normalenrichtung 30 gegen die Tastkugel 20 gerichtete Gegenkraft als Eingabe in eine Regelungseinrichtung. Die Größe der Gegenkraft kann dabei proportional zu einer Eintauchtiefe D der Tastkugel 20 in die virtuelle Oberfläche 22 ausgestaltet sein. Die virtuelle Oberfläche 22 ist gewissermaßen als Raumbereich mit einer Vielzahl von virtuellen Kraftvektoren ausgestaltet, wobei ein Betrag der Kraftvektoren zunimmt, je tiefer man sich in die virtuelle Oberfläche hineinbewegt. Dies hat zur Folge, dass die Tastkugel 20 um ein gewisses - geringes - Maß in die virtuelle Oberfläche "eintaucht", bis die virtuelle Gegenkraft der Soll-Antastkraft entspricht. Die Tastkugel 20 taucht somit nicht vollständig in die Nut 16 hinab, sondern tastet lediglich - auf virtueller Basis - die virtuelle Oberfläche 22 ab. Auf diese Weise durchquert die Tastkugel 20 in der dargestellten Lage B den virtuellen Abschnitt 26.

Da die virtuelle Oberfläche 22 nur einige Millimeter unterhalb (in der in Fig. 1 dargestellten Orientierung) der Messobjektoberfläche 13 angeordnet ist, ist der Abstand zwischen der virtuellen Oberfläche 22 und der Messobjektoberfläche 13 so gering, dass die Tastkugel 20 problemlos die Stufe von der virtuellen Oberfläche 22 auf die Messobjektoberfläche 13 nehmen kann, wenn der Taststift 18 in Vorschubrichtung 28 von der Position B in die Position C verfahren wird. Anschließend wiederholt sich derselbe Vorgang wie für die Nut 16 bei der Position B auch für die Nut 16 bei der Position D. Erneut geht die Tastkugel 20 von einem tatsächlichen Abschnitt 24 der Oberfläche 14 in einen virtuellen Abschnitt 26 der Oberfläche 14 über, der von der virtuellen Oberfläche 22 gebildet wird. So wird vermieden, dass die Tastkugel 20 bei der Position D komplett in die Nut 16 eintaucht, und auch diese Nut 16 kann gefahrlos durchfahren werden. Der Messvorgang des Verfahrens 10 ist dann bei einer Position E des Taststifts 18 abgeschlossen.

Mittels des beschriebenen Verfahrens 10 ist es problemlos möglich, die Nuten 16 in dem Messobjekt 12 zu durchqueren. Des Weiteren ist es nicht notwendig, die Tastkugel 20 von der tatsächlichen Messobjektoberfläche 13 abzuheben, um die Tastkugel 20 gewissermaßen über die Nuten 16 "springen" zu lassen. Es wird daher die gesamte zu vermessende Messobjektoberfläche 13 abgetastet.

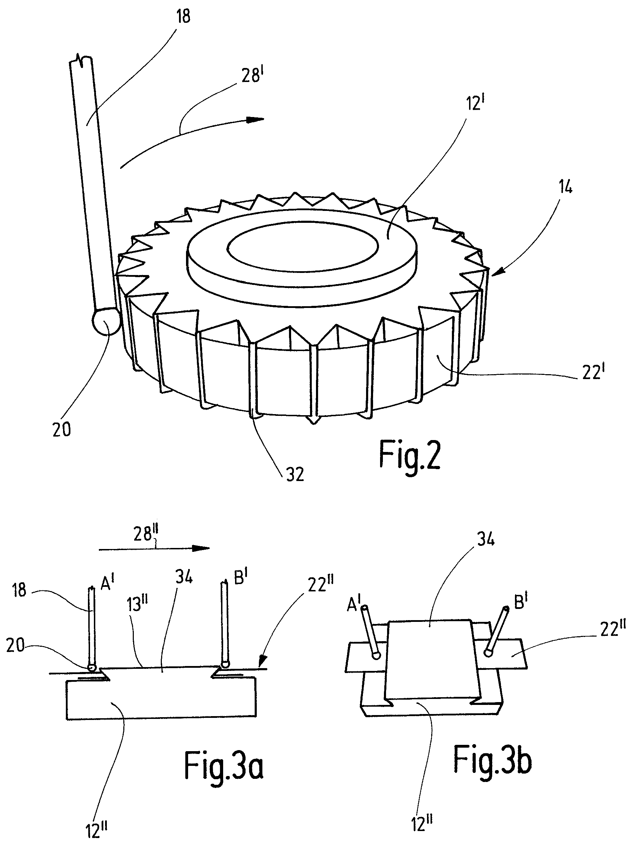

In Fig. 2 ist beispielhaft eine weitere Ausführungsform dargestellt. In diesem Fall ist ein Messobjekt 12' in der Form eines Zahnrades zu vermessen, vorliegend der Kopfkreis der Verzahnung. Somit weist die zu vermessende Oberfläche 14 tatsächliche Abschnitte in Form von Zahnspitzen 32 des Messobjekts 12' auf sowie eine zylindrische virtuelle Oberfläche 22', die um das Messobjekt 12' gelegt ist. Auf diese Weise können lediglich der Kopfkreis bzw. die Zahnspitzen 32 vermessen werden. Der Taststift 18 mit der Tastkugel 20 muss nicht in die Zahnzwischenräume eintauchen, da diese von der virtuellen Oberfläche 22' verdeckt werden. Die Vorschubrichtung 28' ist in diesem Fall kreisförmig.

In den Fig. 3a und 3b ist eine dritte Ausführungsform dargestellt. In diesem Fall soll eine Breite eines Schwalbenschwanzes 34 des Messobjekts 12" vermessen werden. Um die Breite des Schwalbenschwanzes 34 festzustellen, ist eine virtuelle Oberfläche 22" vorgesehen, so dass die Tastkugel 20 nicht unter den Schwalbenschwanz 34 greifen kann und sich in diesem verhakt. Die virtuelle Oberfläche 22" ist nur mit geringem Abstand zu der Messobjektoberfläche 13" des Schwalbenschwanzes 34 vorgesehen, so dass die Tastkugel 20 von der virtuellen Oberfläche 22" auf die tatsächliche Oberfläche 13' steigen kann. Bei einem Messvorgang wird entsprechend der Taststift 18 von einer Position A' entlang der Vorschubrichtung 28" in die Position B' bewegt und so die Breite des Schwalbenschwanzes 34 erfasst.

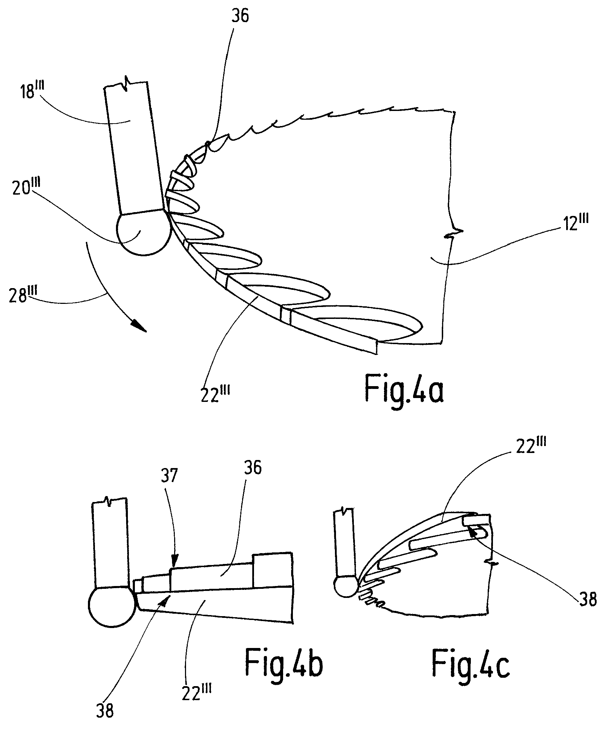

Fig. 4a bis 4c zeigen das Messobjekt 12"' in Form eines Sägeblatts, mit Sägezähnen 36, deren Schneiden vermessen werden sollen. Hierzu wird, ähnlich wie bei der Vermessung des Kopfkreises eines Zahnrads, eine zylindrische virtuelle Oberfläche 22"' vorgesehen. Dies verhindert, dass die Tastkugel 20"' in einen Zwischenraum zwischen den Sägezähnen 36 eintaucht und sich hinter den Schneiden verhakt. Somit wird es durch die virtuelle Oberfläche 22"' möglich, auch in einer Vorschubrichtung 28"' gegen die Schneiden der Sägezähne 36 zu scannen. Es können mehrere virtuelle Oberfläche 22"' angeordnet werden, wie aus den Fig. 4a und 4b hervorgeht. Auf diese Weise wird es möglich, sowohl eine obere Schneidkante 37 als auch eine untere Schneidkante 38 mit Hilfe einer Kreisinterpolation zu erfassen.

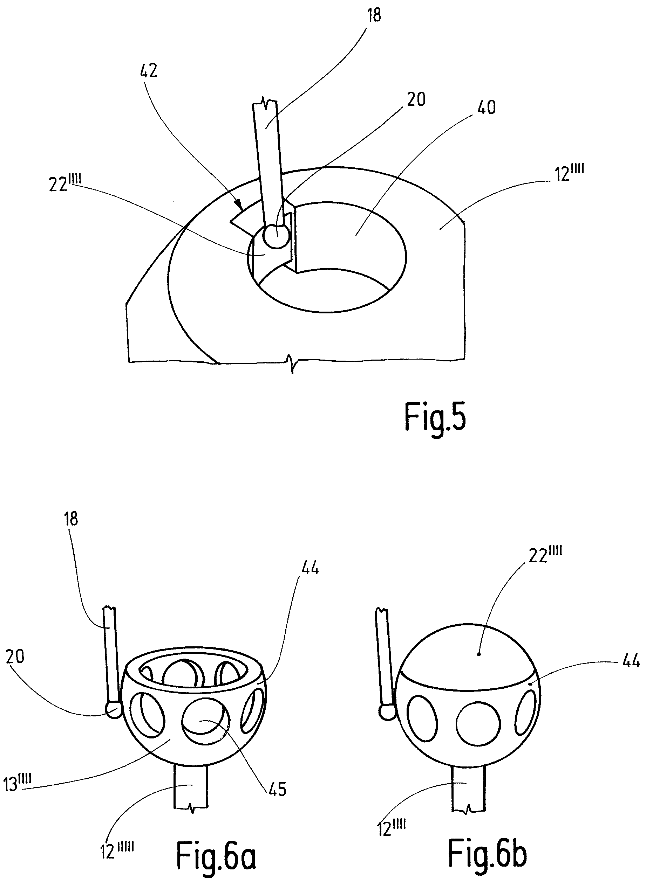

Ähnlich verhält es sich bei dem in Fig. 5 dargestellten Beispiel einer weiteren Ausführungsform. In diesem Fall wird bei einem Messobjekt 12"' eine Bohrung 40 bzw. deren Innendurchmesser vermessen. Die Bohrung 40 weist jedoch eine eingefräste Keilnut 42 auf. Um zu verhindern, dass sich der Taststift 18 in dieser Keilnut 42 verhakt, wird eine virtuelle Oberfläche 22"" über die Keilnut 42 gelegt, um ein zu tiefes Eintauchen des Taststifts 18 bzw. der Tastkugel 20 in die Keilnut 42 zu vermeiden. So ist es möglich, die Bohrung 40 in einem Zug zu scannen und ihren Innendurchmesser mittels einer Kreisinterpolation zu bestimmen.

Ein weiteres Beispiel ist in den Fig. 6a und 6b dargestellt. In diesem Fall soll die Kugelform eines Innenteils 44 einer Gelenkwelle vermessen werden. Damit sich die Tastkugel 20 nicht in Öffnungen 45 des Innenteils 44 verhakt, wird eine virtuelle Oberfläche 22"", die eine Kugelform aufweist, in das Innenteil gelegt. Auf diese Weise wird es möglich, beispielsweise eine Messobjektoberfläche 13"" des Innenteils 44 in Form einer Außenkugel zu vermessen und mittels einer Kugelinterpolation zu bestimmen.

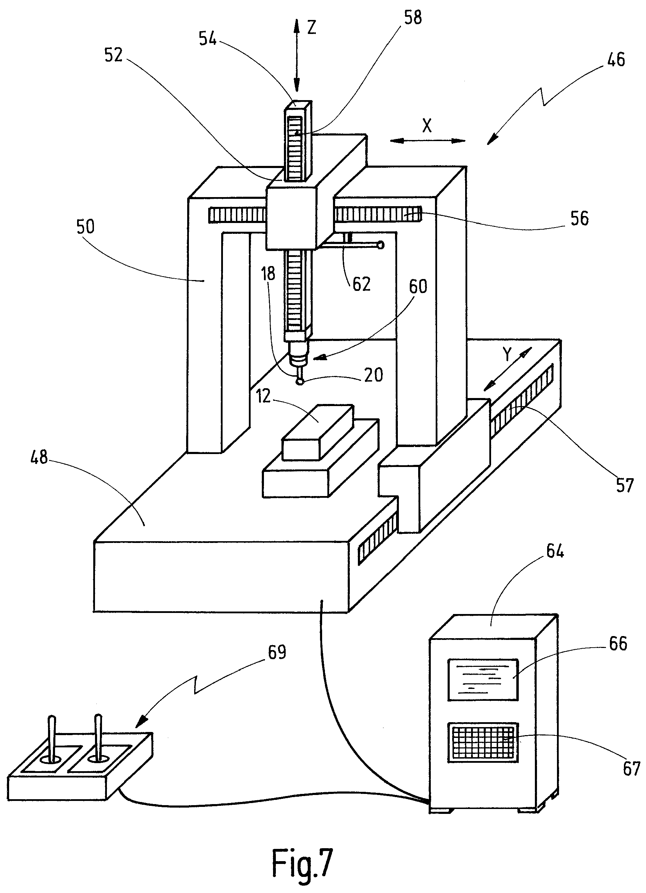

Fig. 7 zeigt ein Koordinatenmessgerät 46 in einer Ausführungsform der Erfindung.

Das Koordinatenmessgerät 46 weist eine Messoberfläche 48 auf, auf der das Messobjekt 12 angeordnet ist. Auf der Messoberfläche 48 ist ein Portal 50 in einer Y-Richtung beweglich gelagert. An dem Portal 50 ist ein Schlitten 52 in einer X-Richtung beweglich gelagert. In dem Schlitten 52 wiederum ist eine Pinole 54 in Z-Richtung verschieblich gelagert.

An einem Ende der Pinole 54 befindet sich ein Tastkopf 60, der den Taststift 18 mit der Tastkugel 20 in sich aufnimmt.

Auf diese Weise kann der Taststift 18 in beliebiger Richtung an das Messobjekt 12 herangefahren werden und das Messobjekt 12 mit der Tastkugel 20 angetastet werden.

Es sind Skalen 56, 57, 58 vorgesehen, entlang derer das Portal 50, der Schlitten 52 und die Pinole 54 bewegt werden. Mittels geeigneter Sensorik kann so anhand der Skalen 56, 57, 58 die Position des Portals 50, des Schlittens 52 und der Pinole 54 bestimmt werden. Der Tastkopf 60 weist eine weitere Sensorik (nicht dargestellt) auf, die aktiv oder passiv messend ausgestaltet sein kann. Mittels dieser Sensorik kann eine Auslenkung des Taststifts 18 relativ zu dem Tastkopf 60 bzw. der Pinole 54 bestimmt werden, so dass auch eine Position der Tastkugel 20 bekannt ist.

Das Koordinatenmessgerät 46 weist des Weiteren eine Regelungseinrichtung 64 auf, die beispielsweise als üblicher Computer ausgebildet sein kann. In üblicher Ausgestaltung weist die Regelungseinrichtung 64 dann eine Ausgabeeinrichtung 66 und eine Eingabeeinrichtung 67 auf, so dass ein Benutzer an der Ausgabeeinrichtung 66 Ergebnisse von Vermessungen ablesen oder beispielsweise ein Ablaufprogramm für einen Messvorgang starten kann. Mittels der Eingabeeinrichtung 67 können beispielsweise verschiedene Modifikationen hinsichtlich der Geschwindigkeit des Messvorgangs, der anzutastenden Oberflächen usw. vorgenommen werden.

Die Regelungseinrichtung 64 ist dazu in der Lage, das Messobjekt 12 gemäß dem vorstehend beschriebenen Verfahren zu vermessen. Basierend auf der zu vermessenden Messobjektoberfläche 13 ist die Regelungseinrichtung 64 dazu in der Lage, virtuelle Oberflächen 22 automatisch entsprechend anzuordnen, beispielsweise indem virtuelle Oberflächen um ein gewisses Maß beabstandet und parallel zu der zu vermessenden tatsächlichen Messobjektoberfläche 13 angeordnet werden. Beispielsweise kann vorgesehen sein, dass im Falle einer zu vermessenden Kugeloberfläche automatisch eine virtuelle Kugeloberfläche von etwas geringerem Radius mit gleichem Mittelpunkt angeordnet wird, um ein Fallen des Taststifts in eine Vertiefung der zu vermessenden Kugeloberfläche zu verhindern. Ein Fallen in eine Vertiefung kann somit auch ohne Kenntnis über tatsächlich vorhandene Vertiefungen bzw. Nuten erfolgen.

Alternativ oder kumulativ kann selbstverständlich auch eine Bedieneinrichtung 69 vorgesehen sein, um einen Messvorgang manuell durchzuführen. So kann beispielsweise ein bestimmter Messvorgang angelernt oder bei einem Ausfall der Regelungseinrichtung 64 die Steuerung des Koordinatenmessgeräts 46 manuell übernommen werden.

Die Regelungseinrichtung 64 kann, wie dargestellt, eine Kabelverbindung zu den übrigen Elementen des Koordinatenmessgeräts 46 aufweisen, sie kann aber auch drahtlos verbunden sein. Selbstverständlich kann es auch vorgesehen sein, dass die Regelungseinrichtung 64 ein integraler Bestandteil der übrigen Elemente ist, beispielsweise in der Messoberfläche 48 oder in dem Portal 50 angeordnet ist. Dort können auch die Ausgabeeinrichtung 66 oder die Eingabeeinrichtung 67 angeordnet sein.

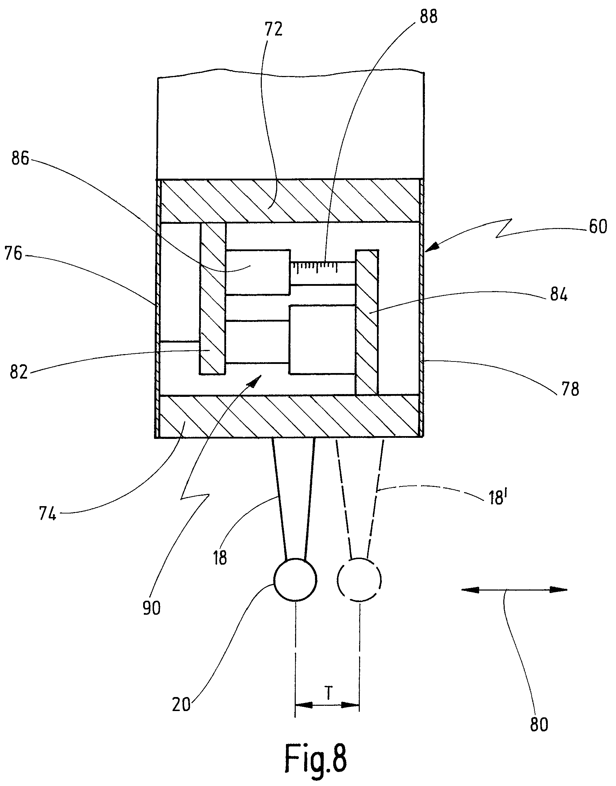

Fig. 8 zeigt anhand einer vereinfachten schematischen Darstellung die grundlegende Funktionsweise des Tastkopfs 60. Der Tastkopf 60 ist dabei als aktiver Tastkopf ausgeführt. Der Tastkopf 60 besitzt einen feststehenden Teil 72 und einen beweglichen Teil 74, die über zwei Blattfedern 42, 44 miteinander verbunden sind. Die Blattfedern 76, 78 bilden ein Federparallelogramm, das eine Bewegung des Teils 74 in Richtung des Pfeils 80 ermöglicht. Damit kann der Taststift 18 um eine Distanz T aus seiner Ruhelage ausgelenkt werden. Bei der Bezugsziffer 18' ist der Tastkopf 60 in der ausgelenkten Position schematisch dargestellt.

Die Auslenkung des Taststifts 18 relativ zu dem feststehenden Teil 72 kann die Folge einer Antastung des Messobjekts 12 sein. Die die Auslenkung des Taststifts 18 wird bei der Bestimmung der Raumkoordinaten der Tastkugel 20 berücksichtigt. Darüber hinaus kann die Auslenkung des Taststifts 18 bei einem aktiven Tastkopf 60 mit Hilfe eines Messkraftgenerators erzeugt werden. An dem feststehenden Teil 72 und an dem beweglichen Teil 74 ist jeweils ein Schenkel 82, 84 angeordnet. Die Schenkel 82, 84 stehen parallel zu den Blattfedern 76, 78 und parallel zueinander. Zwischen den Schenkeln 82, 84 ist ein Sensor 86 (hier mit einer Skala 88 dargestellt) und ein Messkraftgenerator bzw. Messkraftgeber 90 angeordnet. Der Sensor 86 kann eine Tauchspule, ein Hall-Sensor, ein piezoresistiver Sensor oder ein anderer Sensor sein, mit dessen Hilfe die räumliche Auslenkung des Taststifts 18 relativ zu dem feststehenden Teil 72 bestimmt werden kann. Der Messkraftgenerator 90 kann beispielsweise eine Tauchspule sein, mit deren Hilfe die beiden Schenkel 82, 84 gegeneinander gezogen oder auseinander gedrückt werden können. Der Tastkopf 60 ist entsprechend auch mit der Regelungseinrichtung 64 verbunden, damit diese zum einen Größen wie die Auslenkung und die Antastkraft auslesen kann und zum anderen den Messkraftgenerator 90 steuern kann.

In der vereinfachten Darstellung in Fig. 8 ermöglicht der Tastkopf 60 lediglich eine Auslenkung des Taststifts 18 in Richtung des Pfeils 46. Den einschlägigen Fachleuten ist allerdings bekannt, dass ein solcher Tastkopf 60 typischerweise eine entsprechende Auslenkung in zwei weiteren, orthogonalen Raumrichtungen ermöglicht. Ein Ausführungsbeispiel für einen solchen Tastkopf 60 ist beispielsweise in der Druckschrift DE 44 24 225 A1 beschrieben. Die Erfindung ist jedoch nicht auf diesen speziellen Tastkopf 60 beschränkt und kann auch mit anderen messenden oder schaltenden Tastköpfen und Sensorköpfen anderer Messsysteme, insbesondere passiven Tastköpfen, realisiert werden.

Den einschlägigen Fachleuten ist bekannt, dass ein Tastkopf 60 bzw. Sensorkopf der in Fig. 8 stark vereinfacht dargestellten Art in der Regel eine Aufnahme besitzt, an der der Taststift 18 bzw. ein anderer Sensor auswechselbar befestigt ist.

## Patentansprüche

1. Verfahren (10) zum Regeln eines Messvorgangs eines Koordinatenmessgeräts (46) zum Vermessen eines Messobjekts (12), wobei das Koordinatenmessgerät (46) eine Regelungseinrichtung (64) und einen Tastkopf (60) mit einem Taststift (18) aufweist, und wobei eine Relativbewegung zwischen dem Taststift (18) und einer Oberfläche (14) des Messobjekts (12) von der Regelungseinrichtung (64) geregelt wird, wobei die Oberfläche (14) mindestens einen tatsächlichen Abschnitt (24), der einer Messobjektoberfläche (13) entspricht, und mindestens einen virtuellen Abschnitt (26) aufweist, der durch mindestens eine von einem Benutzer vorgegebene virtuelle Oberfläche (22) gebildet ist, **dadurch gekennzeichnet,**
**dass** der Tastkopf (60) ein aktiv messender Tastkopf (60) ist und die Regelungseinrichtung (64) eine Messkraft (F) des Taststifts regelt, wobei proportional zu einer Eintauchtiefe des Taststifts (18) in den mindestens einen virtuellen Abschnitt (26) eine Gegenkraft auf einen Messkraftgeber (90) des aktiv messenden Tastkopfs (60) beaufschlagt wird.

2. Verfahren (10) zum Regeln eines Messvorgangs eines Koordinatenmessgeräts (46) zum Vermessen eines Messobjekts (12), wobei das Koordinatenmessgerät (46) eine Regelungseinrichtung (64) und einen Tastkopf (60) mit einem Taststift (18) aufweist, und wobei eine Relativbewegung zwischen dem Taststift (18) und einer Oberfläche (14) des Messobjekts (12) von der Regelungseinrichtung (64) geregelt wird, wobei die Oberfläche (14) mindestens einen tatsächlichen Abschnitt (24), der einer Messobjektoberfläche (13) entspricht, und mindestens einen virtuellen Abschnitt (26) aufweist, der durch mindestens eine von einem Benutzer vorgegebene virtuelle Oberfläche (22) gebildet ist, **dadurch gekennzeichnet,**
**dass** der Tastkopf (60) ein passiv messender Tastkopf (60) ist und die Regelungseinrichtung (64) eine Auslenkung des Taststifts (18) regelt, wobei proportional zu einer Eintauchtiefe (D) des Taststifts (18) in den mindestens einen virtuellen Abschnitt (26) eine virtuelle Auslenkung auf eine Sollauslenkung des Taststifts (18) beaufschlagt wird.

3. Verfahren nach Anspruch 1 oder 2, **dadurch gekennzeichnet, dass** der mindestens eine virtuelle Abschnitt (26) durch mindestens eine virtuelle Oberfläche (22) gebildet ist, wobei die mindestens eine virtuelle Oberfläche (22) als Vielzahl von Vektoren (23), die mit ihrem Betrag und ihrer Richtung jeweils einer bestimmten Raumkoordinate zugeordnet sind, ausgebildet ist.

4. Verfahren nach Anspruch 2, **dadurch gekennzeichnet, dass** die virtuelle Auslenkung entgegengesetzt zu der Sollauslenkung gerichtet ist, so dass sich bei einer bestimmten Eintauchtiefe (D) des Taststifts (18) in dem mindestens einen virtuellen Abschnitt (26) ein Gleichgewicht zwischen der Sollauslenkung und der virtuellen Auslenkung einstellt.

5. Verfahren nach einem der Ansprüche 1 bis 4, **dadurch gekennzeichnet, dass** eine Lageverschiebung einer bekannten Sollgeometrie des Messobjekts (12) während des Messvorgangs entlang des mindestens einen tatsächlichen Abschnitts (24) erkannt wird, und dass eine Anordnung des mindestens einen virtuellen Abschnitts (26) anhand der Lageverschiebung angepasst wird.

6. Verfahren nach einem der Ansprüche 1 bis 5, **dadurch gekennzeichnet, dass** eine geometrische Form der virtuellen Oberfläche (22) einer Ebene oder einem Zylinder oder einer Kugel entspricht.

7. Koordinatenmessgerät (46) zum Vermessen eines Messobjekts (12), mit einer Regelungseinrichtung (64) und einem Tastkopf (60), der einen Taststift (18) aufweist, wobei eine Relativbewegung zwischen dem Taststift (18) und einer Oberfläche (14) des Messobjekts (12) von der Regelungseinrichtung (64) geregelt wird, wobei die Oberfläche (14) mindestens einen tatsächlichen Abschnitt (24), der einer Messobjektoberfläche (13) entspricht, und mindestens einen virtuellen Abschnitt (26) aufweist, der durch mindestens eine von einem Benutzer vorgegebene virtuelle Oberfläche (22) gebildet ist, **dadurch gekennzeichnet, dass** der Tastkopf (60) ein aktiv messender Tastkopf (60) ist und die Regelungseinrichtung (64) eine Messkraft des Taststifts (18) regelt, wobei proportional zu einer Eintauchtiefe (X) des Taststifts (18) in den mindestens einen virtuellen Abschnitt eine Gegenkraft auf einen Messkraftgeber (90) des aktive messenden Tastkopfs (60) beaufschlagt wird.

8. Koordinatenmessgerät (46) zum Vermessen eines Messobjekts (12), mit einer Regelungseinrichtung (64) und einem Tastkopf (60), der einen Taststift (18) aufweist, wobei eine Relativbewegung zwischen dem Taststift (18) und einer Oberfläche (14) des Messobjekts (12) von der Regelungseinrichtung (64) geregelt wird, wobei die Oberfläche (14) mindestens einen tatsächlichen Abschnitt (24), der einer Messobjektoberfläche (13) entspricht, und mindestens einen virtuellen Abschnitt (26) aufweist, der durch mindestens eine von einem Benutzer vorgegebene virtuelle Oberfläche (22) gebildet ist, **dadurch gekennzeichnet, dass** der Tastkopf (60) ein passiv messender Tastkopf (60) ist und die Regelungseinrichtung (64) eine Auslenkung des Taststifts (18) regelt, wobei proportional zu einer Eintauchtiefe des Taststifts (18) in den mindestens einen virtuellen Abschnitt eine virtuelle Auslenkung auf eine Sollauslenkung des Taststifts (18) beaufschlagt wird.

9. Koordinatenmessgerät nach Anspruch 7 oder 8, **dadurch gekennzeichnet, dass** der mindestens eine virtuelle Abschnitt (26) durch mindestens eine virtuelle Oberfläche (22) gebildet ist, wobei die mindestens eine virtuelle Oberfläche (22) als Vielzahl von Vektoren (23), die mit ihrem Betrag und ihrer Richtung jeweils einer bestimmten Raumkoordinate zugeordnet sind, ausgebildet ist.

10. Koordinatenmessgerät nach Anspruch 8, **dadurch gekennzeichnet, dass** die virtuelle Auslenkung entgegengesetzt zu der Sollauslenkung gerichtet ist, so dass sich bei einer bestimmten Eintauchtiefe (D) des Taststifts (18) in den mindestens einen virtuellen Abschnitt (26) ein Gleichgewicht zwischen der Sollauslenkung und der virtuellen Auslenkung einstellt.

11. Koordinatenmessgerät nach einem der Ansprüche 7 bis 10, **dadurch gekennzeichnet, dass** eine Lageverschiebung einer bekannten Sollgeometrie des Messobjekts (12) während des Messvorgangs entlang des mindestens einen tatsächlichen Abschnitts (24) erkannt wird, und dass eine Anordnung des mindestens einen virtuellen Abschnitts (26) anhand der Lageverschiebung angepasst wird.

12. Koordinatenmeßgerät nach einem der Ansprüche 7 bis 11, **dadurch gekennzeichnet, dass** eine geometrische Form der virtuellen Oberfläche (22) einer Ebene oder einem Zylinder oder einer Kugel entspricht.

13. Computerprogramm mit Programmcodemitteln, das dazu ausgebildet ist, alle Schritte eines Verfahrens (10) nach einem der Ansprüche 1 bis 6 auszuführen, wenn das Computerprogramm in einem Koordinatenmessgerät (46) ausgeführt wird.

## Claims

1. Method (10) for closed-control of a measuring process of a coordinate measuring machine (46) for measuring a measurement object (12), wherein the coordinate measuring machine (46) has a closed-loop control device (64) and a probe head (60) with a stylus (18), and wherein a relative movement between the stylus (18) and a surface (14) of the measurement object (12) is regulated by the closed-loop control device (64), wherein the surface (14) has at least one actual portion (24), corresponding to a measurement object surface (13), and at least one virtual portion (26), which is formed by at least one virtual surface (22) predetermined by a user, **characterized**
**in that** the probe head (60) is an actively measuring probe head (60) and the closed-loop control device (64) regulates a measuring force (F) of the stylus, wherein a counter force is applied to a measuring force transducer (90) of the actively measuring probe head (60) in a manner proportional to an immersion depth of the stylus (18) in the at least one virtual portion (26).

2. Method (10) for closed-control of a measuring process of a coordinate measuring machine (46) for measuring a measurement object (12), wherein the coordinate measuring machine (46) has a closed-loop control device (64) and a probe head (60) with a stylus (18), and wherein a relative movement between the stylus (18) and a surface (14) of the measurement object (12) is regulated by the closed-loop control device (64), wherein the surface (14) has at least one actual portion (24), corresponding to a measurement object surface (13), and at least one virtual portion (26), which is formed by at least one virtual surface (22) predetermined by a user, **characterized**
**in that** the probe head (60) is a passively measuring probe head (60) and the closed-loop control device (64) regulates a deflection of the stylus (18), wherein a virtual deflection is applied to an intended deflection of the stylus (18) in a manner proportional to an immersion depth (D) of the stylus (18) in the at least one virtual portion (26).

3. Method according to Claim 1 or 2, **characterized in that** the at least one virtual portion (26) is formed by at least one virtual surface (22), wherein the at least one virtual surface (22) is embodied as a multiplicity of vectors (23) which, with the magnitude and direction thereof, are respectively associated with a specific spatial coordinate.

4. Method according to Claim 2, **characterized in that** the virtual deflection is directed against the intended deflection such that an equilibrium between the intended deflection and the virtual deflection sets in at a specific immersion depth (D) of the stylus (18) in the at least one virtual portion (26).

5. Method according to one of Claims 1 to 4, **characterized in that** a displacement of a known intended geometry of the measurement object (12) is identified during the measuring process along the at least one actual portion (24) and **in that** an arrangement of the at least one virtual portion (26) is adapted on the basis of the displacement.

6. Method according to one of Claims 1 to 5, **characterized in that** a geometric form of the virtual surface (22) corresponds to a plane or a cylinder or a sphere.

7. Coordinate measuring machine (46) for measuring a measurement object (12), with a closed-loop control device (64) and a probe head (60), which has a stylus (18), wherein a relative movement between the stylus (18) and a surface (14) of the measurement object (12) is regulated by the closed-loop control device (64), wherein the surface (14) has at least one actual portion (24), corresponding to a measurement object surface (13), and at least one virtual portion (26), which is formed by at least one virtual surface (22) predetermined by a user, **characterized in that** the probe head (60) is an actively measuring probe head (60) and the closed-loop control device (64) regulates a measuring force of the stylus (18), wherein a counter force is applied to a measuring force transducer (90) of the actively measuring probe head (60) in a manner proportional to an immersion depth (X) of the stylus (18) in the at least one virtual portion.

8. Coordinate measuring machine (46) for measuring a measurement object (12), with a closed-loop control device (64) and a probe head (60), which has a stylus (18), wherein a relative movement between the stylus (18) and a surface (14) of the measurement object (12) is regulated by the closed-loop control device (64), wherein the surface (14) has at least one actual portion (24), corresponding to a measurement object surface (13), and at least one virtual portion (26), which is formed by at least one virtual surface (22) predetermined by a user, **characterized in that** the probe head (60) is a passively measuring probe head (60) and the closed-loop control device (64) regulates a deflection of the stylus (18), wherein a virtual deflection is applied to an intended deflection of the stylus (18) in a manner proportional to an immersion depth of the stylus (18) in the at least one virtual portion.

9. Coordinate measuring machine according to Claim 7 or 8, **characterized in that** the at least one virtual portion (26) is formed by at least one virtual surface (22), wherein the at least one virtual surface (22) is embodied as a multiplicity of vectors (23) which, with the magnitude and direction thereof, are respectively associated with a specific spatial coordinate.

10. Coordinate measuring machine according to Claim 8, **characterized in that** the virtual deflection is directed against the intended deflection such that an equilibrium between the intended deflection and the virtual deflection sets in at a specific immersion depth (D) of the stylus (18) in the at least one virtual portion (26).

11. Coordinate measuring machine according to one of Claims 7 to 10, **characterized in that** a displacement of a known intended geometry of the measurement object (12) is identified during the measuring process along the at least one actual portion (24) and **in that** an arrangement of the at least one virtual portion (26) is adapted on the basis of the displacement.

12. Coordinate measuring machine according to one of Claims 7 to 11, **characterized in that** a geometric form of the virtual surface (22) corresponds to a plane or a cylinder or a sphere.

13. Computer program with program code means, which is embodied to execute all steps of a method (10) according to one of Claims 1 to 6 when the computer program is executed in a coordinate measuring machine (46).

## Revendications

1. Procédé (10) pour le réglage d'un processus de mesure d'un appareil de mesure de coordonnées (46) pour mesurer un objet à mesurer (12), dans lequel l'appareil de mesure de coordonnées (46) comporte un dispositif de réglage (64) et une sonde (60) équipée d'un palpeur (18), et dans lequel un mouvement relatif entre le palpeur (18) et la surface (14) de l'objet à mesurer (12) est réglé par le dispositif de réglage (64), dans lequel la surface (14) présente au moins une section réelle (24) correspondant à une surface de l'objet à mesurer (13) et au moins une section virtuelle (26), qui est formée par au moins une surface virtuelle (22) prédéfinie par un utilisateur,
**caractérisé en ce que** la sonde (60) est une sonde à mesure active (60) et le dispositif de réglage (64) règle une force de mesure (F) du palpeur, dans lequel une force antagoniste est appliquée à un générateur de force de mesure (90) de la sonde à mesure active (60) proportionnellement à une profondeur de plongée du palpeur (18) dans l'au moins une section virtuelle (26).

2. Procédé (10) pour le réglage d'un processus de mesure d'un appareil de mesure de coordonnées (46) pour mesurer un objet à mesurer (12), dans lequel l'appareil de mesure de coordonnées (46) comporte un dispositif de réglage (64) et une sonde (60) équipée d'un palpeur (18), et dans lequel un mouvement relatif entre le palpeur (18) et une surface (14) de l'objet à mesurer (12) est réglé par le dispositif de réglage (64), dans lequel la surface (14) présente au moins une section réelle (24) correspondant à une surface de l'objet à mesurer (13) et au moins une section virtuelle (26), qui est formée par au moins une surface virtuelle (22) prédéfinie par un utilisateur,
**caractérisé en ce que** la sonde (60) est une sonde à mesure passive (60) et le dispositif de réglage (64) règle une déviation du palpeur (18), dans lequel une déviation virtuelle est appliquée à une déviation nominale du palpeur (18) proportionnellement à une profondeur de plongée (D) du palpeur (18) dans l'au moins une section virtuelle (26).

3. Procédé selon la revendication 1 ou 2, **caractérisé en ce que** l'au moins une section virtuelle (26) est formée par au moins une surface virtuelle (22), dans lequel l'au moins une surface virtuelle (22) est réalisée sous la forme d'une pluralité de vecteurs (23) dont l'amplitude et la direction sont respectivement associées à une coordonnée spatiale déterminée.

4. Procédé selon la revendication 2, **caractérisé en ce que** la déviation virtuelle est orientée en direction opposée à la déviation nominale de manière à ce qu'un équilibre s'établisse, pour une profondeur de plongée déterminée (D) du palpeur (18) dans l'au moins une section virtuelle (26), entre la déviation nominale et la déviation virtuelle.

5. Procédé selon l'une quelconque des revendications 1 à 4, **caractérisé en ce qu'**un déplacement d'une géométrie nominale connue de l'objet à mesurer (12) est identifié pendant le processus de mesure le long de l'au moins une section réelle (24) et **en ce qu'**un agencement de l'au moins une section virtuelle (26) est adapté sur la base du déplacement.

6. Procédé selon l'une quelconque des revendications 1 à 5, **caractérisé en ce qu'**une forme géométrique de la surface virtuelle (22) correspond à un plan ou à un cylindre ou à une sphère.

7. Appareil de mesure de coordonnées (46) destiné à mesurer un objet à mesurer (12), comportant un dispositif de réglage (64) et une sonde (60) équipée d'un palpeur (18), dans lequel un mouvement relatif entre le palpeur (18) et une surface (14) de l'objet à mesurer (12) est réglé par le dispositif de réglage (64), dans lequel la surface (14) présente au moins une section réelle (24) correspondant à la surface de l'objet à mesurer (13) et au moins une section virtuelle (26), qui est formée par au moins une surface virtuelle (22) prédéfinie par un utilisateur, **caractérisé en ce que** la sonde (60) est une sonde à mesure active (60) et le dispositif de réglage (64) règle une force de mesure du palpeur (18), dans lequel une force antagoniste est appliquée à un générateur de force de mesure (90) de la sonde à mesure active (60) proportionnellement à une profondeur de plongée (X) du palpeur (18) dans l'au moins une section virtuelle.

8. Appareil de mesure de coordonnées (46) destiné à mesurer un objet à mesurer (12), comportant un dispositif de réglage (64) et une sonde (60) équipée d'un palpeur (18), dans lequel un mouvement relatif entre le palpeur (18) et une surface (14) de l'objet à mesurer (12) est réglé par le dispositif de réglage (64), dans lequel la surface (14) présente au moins une section réelle (24) correspondant à la surface de l'objet à mesurer (13) et au moins une section virtuelle (26), qui est formée par au moins une surface virtuelle (22) prédéfinie par un utilisateur, **caractérisé en ce que** la sonde (60) est une sonde à mesure passive (60) et le dispositif de réglage (64) règle une déviation du palpeur (18), dans lequel une déviation virtuelle est appliquée à une déviation nominale du palpeur (18) proportionnellement à une profondeur de plongée du palpeur (18) dans l'au moins une section virtuelle.

9. Appareil de mesure de coordonnées selon la revendication 7 ou 8, **caractérisé en ce que** l'au moins une section virtuelle (26) est formée par au moins une surface virtuelle (22), dans lequel l'au moins une surface virtuelle (22) est réalisée sous la forme d'une pluralité de vecteurs (23) dont l'amplitude et la direction sont respectivement associées à une coordonnée spatiale déterminée.

10. Appareil de mesure de coordonnées selon la revendication 8, **caractérisé en ce que** la déviation virtuelle est orientée en direction opposée à la déviation nominale de manière à ce qu'un équilibre s'établisse, pour une profondeur de plongée déterminée (D) du palpeur (18) dans l'au moins une section virtuelle (26), entre la déviation nominale et la déviation virtuelle.

11. Appareil de mesure de coordonnées selon l'une quelconque des revendications 7 à 10, **caractérisé en ce qu'**un déplacement d'une géométrie nominale connue de l'objet à mesurer (12) est identifié pendant le processus de mesure le long de l'au moins une section réelle (24) et **en ce qu'**un agencement de l'au moins une section virtuelle (26) est adapté sur la base du déplacement.

12. Appareil de mesure de coordonnées selon l'une quelconque des revendications 7 à 11, **caractérisé en ce qu'**une forme géométrique de la surface virtuelle (22) correspond à un plan ou à un cylindre ou à une sphère.

13. Programme informatique comportant des moyens à code de programme, conçu pour mettre en oeuvre la totalité des étapes d'un procédé (10) selon l'une quelconque des revendications 1 à 6 lorsque ledit programme informatique est exécuté dans un appareil de mesure de coordonnées (46).
